# EUROPEAN PATENT APPLICATION

(11) **EP 3 470 369 A1**
(43) Date of publication of application: **17.04.2019**
(21) Application number: 17196508.0
(22) Date of filing: 16.10.2017
(51) Int. Cl.: C01B 33/158, C04B 14/06, C08G 18/50

(54) **A COMPOSITE AEROGEL AND PREPARATION METHOD AND APPLICATION THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a polyurethane-silicon-based composite aerogel and preparation method and application thereof, as well as a thermal insulation material comprising the same. The composite aerogel is obtained by reacting a system comprising the following components: an isocyanate; a compound containing an isocyanate reactive group; an amino silane coupling agent; an optional silicon compound capable of forming silicon skeletons and different from the amino silane coupling agent; an organic solvent; and water; the content of silicon groups present in the composite aerogel is no more than 30 wt%, based on that the weight of the composite aerogel is 100 wt%. The composite aerogel of the present invention has advantages of low thermal conductivity and good mechanical strength.

## Description

### TECHNICAL FIELD

The present invention relates to a composite aerogel and preparation method and application thereof, as well as a thermal insulation material comprising the same.

### BACKGROUND

Aerogel is a porous nanomaterial with low density, which is commonly used in the insulation field. Aerogels are classified into inorganic, organic and inorganic- organic aerogels. The inorganic-organic composite aerogel has attracted great attention as it possesses both low thermal conductivity of the inorganic aerogel and good mechanical property of the organic aerogel.

Take silica-organic composite aerogel as example, one of the methods for preparing silica-organic composite aerogel is to physically mix a polymer with silica aerogel to form a mixture. For example, WO1996000750 discloses a method for combining silica aerogel with polyurethane foam, which employs polysiloxane surfactants. This method has the disadvantage in that an unstable structure of the mixture is obtained.

A second method for preparing silica-organic composite aerogel is to obtain the silica-organic composite aerogel via chemical bonding.

For example, US20040132846A1 discloses a multilayer structure, comprising at least one layer of aerogel and at least one layer of fibrous material, in which the aerogel and the fibrous material chemically bond together. The aerogel can be prepared by crosslinking silica with a polymer.

For example, CN101014535A discloses an organomodified silica aerogel composition, which is prepared by incorporating acrylic oligomer into silicate network of silica aerogel. Specifically, it involves reacting the acrylic oligomer with a silica precursor such as tetraalkyl orthosilicate, drying to obtain the silica-organic aerogel. The disadvantage is that the silica-organic composite aerogel thus formed shows poor mechanical property. Therefore, there is a need in the industry for seeking a composite aerogel with both low thermal conductivity and good mechanical property.

### SUMMARY OF THE INVENTION

An objective of the present invention is to provide a composite aerogel and preparation method and application thereof, as well as a thermal insulation material comprising the same.

The composite aerogel according to the present invention is obtained by reacting a system comprising the following components:
An isocyanate;
A compound containing an isocyanate reactive group;
An amino silane coupling agent;

An optional silicon compound capable of forming silicon skeletons and different from the amino silane coupling agent;
An organic solvent; and
Water;

The content of silicon groups present in the composite aerogel is no more than 30 wt%, based on that the weight of the composite aerogel is 100 wt%.

According to one aspect of the present invention, there provides a preparation method for the composite aerogel provided by the present invention, comprising the following steps:
a) reacting an amino silane coupling agent, an optional silicon compound capable of forming silicon skeletons and different from the amino silane coupling agent with water to form a compound containing silicon skeletons;
b) reacting the compound containing silicon skeletons, an isocyanate, an compound containing an isocyanate reactive group with an organic solvent to form a wet gel; and
c) drying the wet gel to obtain the composite aerogel.

According to another aspect of the present invention, there provides use of the composite aerogel provided by the present invention for preparing a thermal insulation material.

According to a further aspect of the present invention, there provides a thermal insulation material, which comprising the composite aerogel provided according to the present invention.

The inventors have found that the wet gel formed by reacting a system comprising an amino silane coupling agent, an isocyanate, a compound containing an isocyanate reactive group, an organic solvent and water shows a higher reaction efficiency and a more stable structure, compared with the prior art, i.e., the composite aerogel formed by introducing isocyanate groups into silica aerogel or silica precursor into an organic polymer. Moreover, the amino silane coupling agent, in particular 3-aminopropyltriethoxysilane, can chemically crosslink the silicon skeletons and isocyanate groups, thus forming a composite aerogel having a nanostructure and a uniform structure.

The step a and step b in the preparation method of the present invention take place at a lower temperature, thereby slowing reaction rates of those steps. The composite aerogel thus obtained has a more uniform structure.

By "the composite aerogel has a stable structure", we mean that it shows good mechanical strength. The present invention further employs CO₂ supercritical drying, which can eliminate surface tension of the internal structure of the wet gel, retain the skeleton structure inside the wet gel, thus further optimizing the mechanical strength of the composite aerogel.

By "the composite aerogel has a uniform structure", we mean that it has a low thermal conductivity. The content of silicon groups present in the composite aerogel of the present invention is no more than 30 wt%, thus further lowering the thermal conductivity of the composite aerogel.

Therefore, the composite aerogel of the present invention has both low thermal conductivity and good mechanical strength.

### SPECIFIC MODE FOR CARRYING OUT THE INVENTION

The present invention provides a composite aerogel, which is obtained by reacting a system comprising the following components: an isocyanate; a compound containing an isocyanate reactive group; an amino silane coupling agent; an optional silicon compound capable of forming silicon skeletons and different from the amino silane coupling agent; an organic solvent; and water; the content of silicon groups present in the composite aerogel is no more than 30 wt%, based on that the weight of the composite aerogel is 100 wt%. The present invention further provides the preparation method and application of the composite aerogel, as well as a thermal insulation material comprising the composite aerogel.

The content of silicon groups present in the composite aerogel is preferably more than 15 wt% and no more than 30 wt%, based on that the weight of the composite aerogel is 100 wt%.

### Isocyanate

The isocyanate has a functionality preferably of no less than 2, further preferably of 2-4.

The NCO content of the isocyanate is preferably of 25%-33%.

The isocyanate can be one or more selected from the group consisting of: aliphatic isocyanates, cycloaliphatic isocyanates and aromatic isocyanates.

The aliphatic isocyanate can be one or more selected from the group consisting of: hexamethylene diisocyanate, 2,2-dimethylpentane diisocyanate, 2,2,4-trimethylhexane diisocyanate, butene diisocyanate, 1,3- butadiene-1, 4-diisocyanate, 2,4,4-trimethylhexamethylene diisocyanate, 1,6,11-undecane triisocyanate, 1,3,6-hexamethylene triisocyanate, 1,8-diisocyanato-4-isocyanatomethyloctane, bis(isocyanatoethyl)carbonate, bis(isocyanatoethyl)ether, lysine diisocyanatomethyl ester, lysine triisocyanate, bis(isocyanatomethyl)sulfide, bis(isocyanatoethyl)sulfide, bis(isocyanatopropyl)sulfide, bis(isocyanatohexyl)sulfide, bis(isocyanatomethyl)sulfone, bis(isocyanatomethyl)disulfide, bis(isocyanatoethyl)disulfide, bis(isocyanatopropyl)disulfide, bis(isocyanatomethylthio)methane, bis(isocyanatoethylthio) methane, bis(isocyanatomethylthio)ethane, bis(isocyanatoethylthio)ethane, 1,5-diisocyanato-2-isocyanatomethyl-3-thiapentane, 1,2,3-tris(isocyanatomethylthio)propane, 1,2,3- 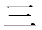 (isocyanatoethylthio)propane, 3,5-dithia-1,2,6,7-heptane tetraisocyanate, 2,6-diisocyanatomethyl-3,5-dithia-1,7- heptane diisocyanate, 2,5-diisocyanate methyl thiophene, isocyanatoethylthio-2,6-dithia-1,8-octane diisocyanate, thiobis(3-isothiocyanatopropane), thiobis(2-isothiocyanatoethane), dithiobis(2-isothiocyanatoethane), hexamethylene diisocyanate and isophorone diisocyanate, preferably hexamethylene diisocyanate.

The cycloaliphatic isocyanate can be one or more selected from the group consisting of: 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, isophorone diisocyanate, 2,5-diisocyanatotetrahydrothiophene, 2,5-bis(isocyanatomethyl)tetrahydrothiophene, 3,4-dis(isocyanatomethyl)tetrahydrothiophene, 2,5-diisocyanato-1,4-dithiane, 2,5-dis(isocyanatomethyl)-1,4-dithiane, 4,5-diisocyanato-1,3-dithiolane, 4,5-bis(isocyanatomethyl)-1,3-dithiolane, 4,5-bis(isocyanatomethyl)-2-methyl-1,3-dithiolane, norbornane diisocyanate(NBDI), benzenedimethylenediisocyanate(XDI), hydrogenated benzenedimethylenediisocyanate(H6XDI), 1,4-cyclohexyldiisocyanate (H₆PPDI), 1,5-pentane diisocyanate(PDI), *m*-tetramethylbenzenedimethyl diisocyanate(*m*-TMXDI) and cyclohexane diisothiocyanate, preferably isophorone diisocyanate and/or dicyclohexyldiisocyanate.

The aromatic isocyanate can be one or more selected from the group consisting of: 1,2-diisocyanatobenzene, 1,3-diisocyanatobenzene, 1,4-diisocyanatobenzene, 2,4-diisocyanatotoluene, ethylphenylene diisocyanate, isopropylphenylene diisocyanate, toluene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylenebis(phenyl isocyanate), 4,4'-methylenebis(2- methylphenyl isocyanate), bibenzyl-4,4'-diisocyanate, bis(isocyanatophenyl)ethylene, bis(isocyanatomethyl)benzene, bis(isocyanatoethyl)benzene, bis(isocyanatopropyl)benzene, α, α, α', α'-tetramethylxylylene diisocyanate, bis(isocyanatobutyl)benzene, bis(isocyanatomethyl)naphthalene, bis(isocyanatomethylphenyl)ether, bis(isocyanatoethyl)phthalate, 2,6-di(isocyanatomethyl)furan, 2-isocyanatophenyl-4-isocyanatophenylsulfide, bis(4-isocyanatophenyl)sulfide, bis(4-isocyanatomethylphenyl)sulfide, bis(4-isocyanatophenyl)disulfide, bis(2-methyl-5-isocyanatophenyl)disulfide, bis(3-methyl-5-isocyanatophenyl)disulfide, bis(3-methyl-6-isocyanatophenyl)disulfide, bis(4-methyl-5-isocyanatophenyl)disulfide, bis(4-methoxy-3-isocyanatophenyl)disulfide, 1,2-diisothiocyanatobenzene, 1,3-diisothiocyanatobenzene, 1,4-diisothiocyanatobenzene, 2,4-diisothiocyanatotoluene, 2,5-diisothiocyanato-*m*-xylene, 4,4'-methylenebis(phenyl isothiocyanate), 4,4'-methylenebis(2-methylphenyl isothiocyanate), 4,4'-methylenebis(3-methylphenyl isothiocyanate), 4,4'-diisothiocyanato benzophenone, 4,4'-diisothiocyanato-3, 3'-dimethylbenzophenone, bis(4-isothiocyanatophenyl)ether, 1-isothiocyanato-4-[(2-isothiocyanato)sulfonyl]benzene, thiobis(4-isothiocyanatobenzene), sulfonyl(4-isothiocyanatobenzene), hydrogenated toluene diisocyanate (H6TDI), diphenylmethane diisocyanate and dithiobis(4-isothiocyanatobenzene), preferably one or more selected from the group consisting of: 1,2-diisocyanatobenzene, 1,3-diisocyanatobenzene, 1,4-diisocyanatobenzene, diphenylmethane diisocyanate and 2,4-diisocyanatotoluene.

The isocyanate can also have isocyanato groups and isothiocyanato groups, such as 1-isocyanato-6-isothiocyanatohexane, 1-isocyanato-4-isothiocyanatocyclohexane, 1-isocyanato-4-isothiocyanatobenzene, 4-methyl-3-isocyanato-1-isothiocyanatobenzene, 2-isocyanato-4, 6-diisothiocyanato-1, 3, 5-triazine, 4-isocyanatophenyl-4-isothiocyanatophenylsulfide and 2-isocyanatoethyl-2-isothiocyanatoethyldisulfide.

The isocyanate can further be a halogen substitution of the aforementioned isocyanates such as a chlorine substitution thereof, a bromine substitution thereof, an alkyl substitution thereof, an alkoxy substitution thereof, a nitro substitution thereof or a silane substitution thereof such as isocyanatopropyltriethoxysilane or isocyanatopropyltrimethoxysilane.

The isocyanates are not limited to the compounds listed above. In addition, the compounds listed above may be used alone or in a combination of two types or more.

The content of the isocyanate can be 1.5-5.0 wt%, preferably 3.0-4.5 wt%, based on that the weight of the system is 100 wt%.

### Compound Containing An Isocyanate Reactive Group

The compound containing an isocyanate reactive group is preferably compound containing a hydroxyl group and/or compound containing an amine group, most preferably the compound containing an amine group.

The compound containing a hydroxyl group can be one or more selected from the group consisting of: polyester polyol, polyacrylate polyol, polyurethane polyol, polycarbonate polyol, polyether polyol, polyester polyacrylate polyol, polyurethane polyacrylate polyol, polyurethane polyester polyol, polyurethane polyether polyol, polycarbonate polyether polyol, polyurethane polycarbonate polyol, polyester polycarbonate polyol and hydroxyl functional groups containing compounds having a molecular weight of 32-400 g/mol.

The compound containing an amine group can be one or more selected from the group consisting of: mono-, di-, trifunctional amines and/or mono-, di-, trifunctional hydroxylamines, aliphatic and/or alicyclic primary and/or secondary monoamines such as ethylamine, diethylamine, isopropylamine, butylamine, cyclohexylamine; amino alcohols such as ethanolamine, N-methylethanolamine, diethanolamine, diisopropanolamine, 1, 3-diamino-2-propanol, N-(2- hydroxyethyl)-ethylenediamine, N, N-bis(2- hydroxyethyl)ethylenediamine, 2-propanolamine; diamines or triamines such as 1, 2-ethylenediamine, 1, 6-hexanediamine, isophorone diamine, 4,4'-diaminodiphenylmethane, piperazine, 1, 4-diaminocyclohexane, bis-(4-aminocyclohexyl)-methane and diethylenetriamine, adipic dihydrazide, hydrazine and hydrazine hydrate, preferably one or more selected from the group consisting of: 1,2-ethylenediamine, isophorone diamine and 4,4'-diaminodiphenylmethane, most preferably 4,4'-diaminodiphenylmethane.

The compound containing a hydroxyl group or compound containing an amine group can also present in the form of prepolymer of monomer.

The content of the compound containing an isocyanate reactive group can be 1.5-5.0 wt%, preferably 1.5-2.5 wt%, based on that the weight of the system is 100 wt%.

The molar ratio of the NCO groups of the isocyanate and the isocyanate reactive groups of the compound containing an isocyanate reactive group is 120-600:1, most preferably 120:1.

### Amino Silane Coupling Agent

The amino silane coupling agent is used to form silicon skeletons and to crosslink with isocyanate groups.

The amino silane coupling agent is preferably 3-aminopropyltriethoxysilane.

### Silicon Compound Capable of Forming Silicon Skeletons and Different From the Amino Silane Coupling Agent

The silicon compound capable of forming silicon skeletons and different from the amino silane coupling agent can be one or more selected from the group consisting of: sodium silicate, tetraalkyl orthosilicate, monomeric alkylalkoxysilane, bis-trialkoxyalkyl silane or bis-trialkoxyaryl silane, and polyhedral silsesquioxane.

The silicon compound capable of forming silicon skeletons and different from the amino silane coupling agent is preferably tetraalkyl orthosilicate.

The tetraalkyl orthosilicate is preferably tetraethyl orthosilicate and/or tetramethyl orthosilicate, most preferably tetraethyl orthosilicate.

The mass ratio of the silicon compound capable of forming silicon skeletons and different from the amino silane coupling agent to the amino silane coupling agent can be 0:1-10:1, preferably 2:1-5:1, most preferably 2:1-3:1.

### Organic Solvent

The organic solvent is preferably one or more selected from the group consisting of: acetone, methanol, ethanol, isopropanol and tetrahydrofuran, most preferably acetone.

The content of the organic solvent is 90-95wt%, based on that the weight of the system is 100 wt%.

### Water

The water is preferably deionized water.

The content of water is preferably no more than 0.5wt%, based on that the weight of the system is 100 wt%.

The composite aerogel can have a density of 0.025 g/cm³-0.500 g/cm³, preferably of 0.050g/cm³-0.250g/cm³, most preferably of 0.050g/cm³-0.090g/cm³, measured under one atmospheric pressure and at ambient temperature.

The composite aerogel can have a thermal conductivity of 0.008 W/m•K -0.040 W/m•K, preferably of 0.015 W/m•K -0.025 W/m•K, most preferably of 0.019W/m•K-0.023W/m•K, measured under one atmospheric pressure and at ambient temperature.

The composite aerogel comprises urethane groups and silicon groups.

### Preparation Method

### Step a

The amino silane coupling agent and the optional silicon compound capable of forming silicon skeletons and different from the amino silane coupling agent are subjected to hydrolysis reaction in water to form the compound containing silicon skeletons.

The reaction temperature of step a is preferably no more than 0°C, most preferably - 30°C-0°C.

The ratio of mass of the amino silane coupling agent and the optional silicon compound capable of forming silicon skeletons and different from the amino silane coupling agent to the mass of water is 3:1-6:1.

### Step b

The isocyanate, the compound containing an isocyanate reactive group and organic solvent can react to form urethane groups, which is also known as polyurethane groups. During the formation of the polyurethane groups, the amino groups from the amino silane coupling agent in the mixture containing silicon skeletons can react with the isocyanate, thereby forming stable polyurethane -silicon-based wet gel structure.

The reaction temperature of step b is preferably no more than 0°C, most preferably - 30°C-0°C.

### Step c

The drying is preferably performed with supercritical CO₂.

Drying with supercritical CO₂ can be carried out as follows: immersing the wet gel into liquid CO₂ in an autoclave at a temperature of 5°C for 3-5 days; then heating the autoclave to 40°C-50°C and the pressure in the autoclave is 8-10 MPa, and after 3-5 h, the polyurethane-silicon-based composite aerogel is obtained.

### EXAMPLES

All the percentages in the present invention are percentages by weight, unless indicated otherwise.

All the analytical measurements in the present invention are conducted at 23°C, unless indicated otherwise.

Measursing method of density: weighing a composite aerogel sample with an electronic balance with a precision of 10⁻⁴ at a temperature of 25°C and under one atmospheric pressure; measuring the diameter and height of the composite aerogel sample with a vernier caliper; and calculating the density of the sample following the equation: ρ=m/V.

Measuring of thermal conductivity is conducted by thermal conductivity tester from Nestz, Germany. Test temperature and pressure are 25°C and one atmospheric pressure, respectively. The composite aerogel sample has a height of 18 mm and a diameter of 25 mm.

The content of isocyanate groups (NCO) is measured by volume according to DIN-EN ISO 11909.

### Raw Materials and Reagents

Desmodur 44V20L: diphenylmethane diisocyanate, functionality: 2.3, NCO content: 30.5-32.5%, available from Covestro (Germany) Co. Ltd, used as the isocyanate.
AHD447-B3: diphenylmethane diisocyanate, functionality: 2.6, NCO content: 26.7%, trimer content: 35.7%, from Covestro (Germany) Co. Ltd, used as the isocyanate.
MDA: 4,4'-diaminodiphenyl methane, NH₂ group content: 16.1%, available from Covestro (Germany) Co. Ltd, used as the compound containing an isocyanate reactive group.
MDA-61: 4,4'-diaminodiphenyl methane, NH₂ group content: 15.5-17.5%, available from Covestro (Germany) Co. Ltd, used as the compound containing an isocyanate reactive group.
Tetraethyl orthosilicate: silicon group content ≥28.4%, available from Sinopharm Chemical Reagent Co., Ltd, used as the silicon compound capable of forming silicon skeletons and different from the amino silane coupling agent.
3-aminopropyltriethoxysilane: available from Beijing Innochem Co., Ltd, used as the amino silane coupling agent.

### Example 1

1.0g tetraethyl orthosilicate, 0.5g 3-aminopropyltriethoxysilane and 0.3 g deionized water were mixed and stirred for 5 min at -20 °C to obtain a compound containing silicon skeletons. 3.3g Desmodur 44V20L, 1.7g MDA, 94.0g acetone and the compound containing silicon skeletons were mixed and stirred homogenously at -20 °C, then left to stand for 5 min and aged for 12 h to obtain a wet gel. The wet gel was immersed into liquid CO₂ in an autoclave at a temperature of 5°C for 5 days. Then the autoclave was warmed up to 50°C and the pressure in the autoclave was 8 MPa, after 5 h, gas was emitted slowly to obtain the polyurethane -silicon-based composite aerogel, having a density of 0.087g/cm³, and a thermal conductivity of 0.023W/m•K. The molar ratio of the NCO groups of the isocyanate and the NH₂ groups of MDA is 120 and the content of the silicon groups in the composite aerogel is 16.67%, based on that the weight of the composite aerogel is 100 wt%.

### Example 2

1.0g tetraethyl orthosilicate, 0.5g 3-aminopropyltriethoxysilane and 0.3 g deionized water were mixed and stirred for 5 min at -20 °C to obtain a compound containing silicon skeletons. 3.4g AHD447-B3, 1.5g MDA-61, 94.1g acetone and the compound containing silicon skeletons were mixed and stirred homogenously at -20 °C, then left to stand for 5 min and aged for 12 h to obtain a wet gel. The wet gel was immersed into liquid CO₂ in the autoclave at a temperature of 5°C for 3 days. Then the autoclave was warmed up to 50°C and the pressure in the autoclave was 8 MPa and after 5 h, gas was emitted slowly to obtain the polyurethane-silicon-based composite aerogel, having a density of 0.054g/cm³, and a thermal conductivity of 0.019W/m·K. The molar ratio of the NCO groups of the isocyanate and the NH₂ groups of MDA-61 is 120 and the content of the silicon groups in the composite aerogel is 16.67%, based on that the weight of the composite aerogel is 100 wt%.

### Example 3

1.5g tetraethyl orthosilicate, 0.5g 3-aminopropyltriethoxysilane and 0.4 g deionized water were mixed and stirred for 5 min at -20 °C to obtain a compound containing silicon skeletons. 4.4g AHD447-B3, 2.0g MDA-61, 92.1g acetone and the compound containing silicon skeletons were mixed and stirred homogenously at -20 °C, then left to stand for 5 min and aged for 12 h to obtain a wet gel. The wet gel was immersed into liquid CO₂ in an autoclave at a temperature of 5°C for 4 days. Then the autoclave was warmed up to 50°C and the pressure in the autoclave was 8 MPa and after 5 h, gas was emitted slowly to obtain the polyurethane-silicon-based composite aerogel, having a density of 0.080g/cm³, and a thermal conductivity of 0.020W/m·K. The molar ratio of the NCO groups of the isocyanate and the NH₂ groups of MDA-61 is 120 and the content of the silicon groups in the composite aerogel is 28.57%, based on that the weight of the composite aerogel is 100 wt%.

### Example 4

1.5g tetraethyl orthosilicate, 0.5g 3-aminopropyltriethoxysilane and 0.4 g deionized water were mixed and stirred for 5 min at -20 °C to obtain a compound containing silicon skeletons. 4.4g AHD447-B3, 2.3g MDA, 91.8g acetone and the compound containing silicon skeletons were mixed and stirred homogenously at -20 °C, then left to stand for 5 min and aged for 12 h to obtain a wet gel. The wet gel was immersed into liquid CO₂ in an autoclave at a temperature of 5°C for 3 days. Then the autoclave was warmed up to 50°C and the pressure in the autoclave was 8 MPa and after 5 h, gas was emitted slowly to obtain the polyurethane-silicon-based composite aerogel, having a density of 0.076g/cm³, and a thermal conductivity of 0.020W/m·K. The molar ratio of the NCO groups of the isocyanate and the NH₂ groups of MDA is 120 and the content of the silicon groups in the composite aerogel is 28.57%, based on that the weight of the composite aerogel is 100 wt%.

### Example 5

1.0g tetraethyl orthosilicate, 0.5g 3-aminopropyltriethoxysilane and 0.3 g deionized water were mixed and stirred for 5 min at -20 °C to obtain a compound containing silicon skeletons. 4.5g AHD447-B3, 2.0g MDA-61, 92.5g acetone and the compound containing silicon skeletons were mixed and stirred homogenously at -20 °C, then left to stand for 5 min and aged for 12 h to obtain a wet gel. The wet gel was immersed into liquid CO₂ in an autoclave at a temperature of 5°C for 5 days. Then the autoclave was warmed up to 50°C and the pressure in the autoclave was 8 MPa and after 5 h, gas was emitted slowly to obtain the polyurethane-silicon-based composite aerogel, having a density of 0.074g/cm³, and a thermal conductivity of 0.019W/m·K. The molar ratio of the NCO groups of the isocyanate and the NH₂ groups of MDA-61 is 120 and the content of the silicon groups in the composite aerogel is 16.67%, based on that the weight of the composite aerogel is 100 wt%.

It will be obvious to those skilled in the art that the present invention is not merely limited to the specific details described above, and it can be practiced as other specific forms without departing from the spirit and main characteristics of the present invention. Therefore, the examples should be considered as illustrative other than restrictive from any perspective, thereby the scope of the present invention is indicated by claims other than the descroiption described above; and therefore any modification should be considered as belonging to the present invention as long as it pertains to the meaning and scope of the claim equivalents.

## Claims

1. A composite aerogel obtained by reacting a system comprising the following components:
An isocyanate;
A compound containing an isocyanate reactive group, preferably a compound containing an amine group and/or a hydroxyl group;
An amino silane coupling agent;
An optional silicon compound capable of forming silicon skeletons and different from the amino silane coupling agent;
An organic solvent, preferably one or more selected from the group consisting of: acetone, methanol, ethanol, isopropanol and tetrahydrofuran; and
Water;
The content of silicon groups present in the composite aerogel is no more than 30 wt%, based on that the weight of the composite aerogel is 100 wt%.

2. The composite aerogel according to claim 1, **characterized in that**, the mass ratio of the silicon compound capable of forming silicon skeletons and differnt from the amino silane coupling agent and the amino silane coupling agent is 0:1-10:1, preferably 2:1-5:1, most preferably 2:1-3:1.

3. The composite aerogel according to claim 1, **characterized in that**, the amino silane coupling agent is 3-aminopropyltriethoxysilane.

4. The composite aerogel according to claim 1, **characterized in that**, the silicon compound capable of forming silicon skeletons and different from the amino silane coupling agent is tetraalkyl orthosilicate, preferably tetraethyl orthosilicate and/or tetramethyl orthosilicate, most preferably tetraethyl orthosilicate.

5. The composite aerogel according to claim 1, **characterized in that**, the composite aerogel has a thermal conductivity of 0.008 W/m•K -0.040 W/m•K, preferably of 0.015 W/m•K -0.025 W/m•K, most preferably of 0.019W/m•K-0.023W/m•K, measured under one atmospheric pressure and at ambient temperature.

6. The composite aerogel according to any one of claims 1-5, **characterized in that**, the molar ratio of the isocyanate groups of the isocyanate and the isocyanate reactive groups of the compound containing an isocyanate reactive group is 120-600:1, preferably 120:1.

7. The composite aerogel according to any one of claims 1-6, **characterized in that**, the composite aerogel comprises urethane groups and silicon groups.

8. A preparation method of the composite aerogel according to any one of claims 1-7, comprising the following steps:
a) reacting an amino silane coupling agent, an optional silicon compound capable of forming silicon skeletons and different from the amino silane coupling agent with water to form a compound containing silicon skeletons;
b) reacting the compound containing silicon skeletons, the isocyanate, the compound containing an isocyanate reactive group with the organic solvent to form a wet gel; and
c) drying the wet gel to obtain the composite aerogel.

9. The preparation method according to claim 8, **characterized in that**, the reaction temperatures of the step a and the step b are no more than 0°C, preferably -30°C-0°C, independently of each other.

10. The preparation method according to claim 8, **characterized in that**, the drying is CO₂ supercritical drying.

11. The preparation method according to claim 8, **characterized in that**, the ratio of mass of the amino silane coupling agent and the optional silicon compound capable of forming silicon skeletons and different from the amino silane coupling agent to the mass of water is 3:1-6:1.

12. Use of the composite aerogel according to any one of claims 1-7 for preparing a thermal insulation material.

13. A thermal insulation material comprising the composite aerogel according to any one of claims 1-7.
